# EUROPEAN PATENT APPLICATION

(11) **EP 4 459 913 A1**
(43) Date of publication of application: **06.11.2024**
(21) Application number: 21969825.5
(22) Date of filing: 31.12.2021
(51) Int. Cl.: H04L 1/18

(54) **TRANSMISSION MODE SWITCHING METHOD AND DEVICE/STORAGE MEDIUM/APPARATUS**

(71) Applicant: Beijing Xiaomi Mobile Software Co., Ltd., Beijing 100085 (CN)
(72) Inventor: WU, Yumin, Beijing 100085 (CN)
(74) Representative: Dehns Germany Partnerschaft mbB
(86) International application number: PCT/CN2021/143980
(87) International publication number: WO 2023/123481

(57) **Abstract**

The present disclosure provides a transmission mode switching method and device/storage medium/apparatus, and belongs to the technical field of communications. The method comprises: determining a first switching condition, wherein the first switching condition comprises that the number of transmission failures of a specific hybrid automatic repeat request (HARQ) process of a UE is greater than or equal to a first threshold; counting the number of transmission failures of the specific HARQ process of the UE, and switching a transmission mode of the UE from a first transmission mode to a second transmission mode in response to the number of transmission failures meeting the first switching condition. According to the method of the present disclosure, whether to switch a transmission mode is determined by defining, for a UE which has a plurality of HARQ processes, the number of data transmission failures of which one or which several specific HARQ processes to specifically use, and the technical problem of being unable to determine the number of data transmission failures of which one or which several HARQ processes to specifically use in order to determine whether to switch a transmission mode in the prior art is solved.

## Description

### TECHNICAL FIELD

The disclosure relates to a field of communication technology, and more particularly, to a transmission mode switching method and device, a storage medium, and a device.

### BACKGROUND

In a communication system, data transmission may have expected arrival time or survival time. During data transmission, if a data receiver (e.g., a user equipment (UE)) does not receive the data at the expected arrival time, it may be determined that the data transmission fails, and the data receiver may request a transmitter (e.g., a network side device) to retransmit the data. In response to several consecutive data transmission failures, the receiver may determine that an application service of a current transmission mode is in an unavailable state and may switch the transmission mode.

In the related art, the receiver may determine whether to switch the transmission mode according to a number of data transmission failures of hybrid automatic repeat request (HARQ) data in a HARQ process.

However, the receiver may have multiple HARQ processes, and it is a technical problem to determine the number of data transmission failures of which HARQ process(es) is used for determining whether to switch the transmission mode.

### SUMMARY

The disclosure provides a transmission mode switching method and device/ a storage medium/ a device, so as to provide a transmission mode switching method for a user equipment (UE) having multiple hybrid automatic repeat request (HARQ) processes.

According to a first aspect of embodiments of the disclosure, a transmission mode switching method performed by a UE is provided. The method includes:
determining a first switching condition, the first switching condition including that a number of transmission failures of a specific HARQ process of the UE is greater than or equal to a first threshold; and
counting the number of transmission failures of the specific HARQ process of the UE, and in response to the number of transmission failures satisfying the first switching condition, switching a transmission mode of the UE from a first transmission mode to a second transmission mode.

According to a second aspect of embodiments of the disclosure, a transmission mode switching method performed by a network side device is provided. The method includes:
configuring a first switching condition to a UE, the first switching condition including that a number of transmission failures of a specific HARQ process of the UE is greater than or equal to a first threshold.

According to a third aspect of embodiments of the disclosure, a transmission mode switching device is provided. The device includes:
a determining module, configured to determine a first switching condition, the first switching condition including that a number of transmission failures of a specific HARQ process of a UE is greater than or equal to a first threshold; and
a processing module, configured to count the number of transmission failures of the specific HARQ process of the UE, and in response to the number of transmission failures satisfying the first switching condition, switch a transmission mode of the UE from a first transmission mode to a second transmission mode.

According to a fourth aspect of embodiments of the disclosure, a transmission mode switching device is provided. The device includes:
a configuring module, configured to configure a first switching condition for a UE, the first switching condition including that a number of transmission failures of a specific HARQ process of the UE is greater than or equal to a first threshold.

According to a fifth aspect of embodiments of the disclosure, a communication device including a processor and a memory having a computer program stored thereon is provided. When the computer program is executed by the processor, the device is caused to implement the method of the first aspect of embodiments.

According to a sixth aspect of embodiments of the disclosure, a communication device including a processor and a memory having a computer program stored thereon is provided. When the computer program is executed by the processor, the device is caused to implement the method of the second aspect of embodiments.

According to a seventh aspect of embodiments of the disclosure, a communication device including a processor and a memory having a computer program stored thereon is provided. When the computer program is executed by the processor, the device is caused to implement the method of the above aspects of embodiments.

According to an eighth aspect of embodiments of the disclosure, a communication device including a processor and an interface circuit is provided.

The interface circuit is configured to receive code instructions and transmit them to the processor.

The processor is configured to run the code instructions to implement the method of the first aspect of embodiments.

According to a ninth aspect of embodiments of the disclosure, a communication device including a processor and an interface circuit is provided.

The interface circuit is configured to receive code instructions and transmit them to the processor.

The processor is configured to run the code instructions to implement the method of the second aspect of embodiments.

According to a tenth aspect of embodiments of the disclosure, a communication device including a processor and an interface circuit is provided.

The interface circuit is configured to receive code instructions and transmit them to the processor.

The processor is configured to run the code instructions to implement the method of the above aspects of embodiments.

According to an eleventh aspect of embodiments of the disclosure, a computer readable storage medium having instructions stored thereon is provided. When the instructions are executed, the method of the first aspect of embodiments is implemented.

According to a twelfth aspect of embodiments of the disclosure, a computer readable storage medium having instructions stored thereon is provided. When the instructions are executed, the method of the second aspect of embodiments is implemented.

According to a thirteenth aspect of embodiments of the disclosure, a computer readable storage medium having instructions stored thereon is provided. When the instructions are executed, the method of the above aspects of embodiments is implemented.

In conclusion, in a transmission mode switching method and device/a storage medium/ a device provided in embodiments of the disclosure, the UE determines the first switching condition including that the number of transmission failures of a specific HARQ process of the UE is greater than or equal to the first threshold. The UE counts the number of transmission failures of the specific HARQ process, and in response to the number of transmission failures satisfying the first switching condition, a transmission mode of the UE is switched from the first transmission mode to the second transmission mode. In this way, in an embodiment of the disclosure, the specific HARQ process(es) can be defined in the first switching condition determined by the UE, and the UE may count the number(s) of transmission failures of the specific HARQ process(es) based on the first switching condition to determine whether to switch the transmission mode. In the method of the disclosure, the specific HARQ process(es) for which the number(s) of transmission failures is to be counted by the UE may be defined. In this way, for the UE having multiple HARQ processes, the number(s) of data transmission failures of which specific HARQ process(es) is used for determining whether to switch the transmission mode is defined, thus solving the technical problem in the related art of "unable to determine the number(s) of data transmission failures of which specific HARQ process(es) is to be counted to determine whether to switch the transmission mode".

Additional aspects and advantages of the disclosure will be given in part in the following descriptions, become apparent in part from the following descriptions, or be learned from the practice of the disclosure.

### BRIEF DESCRIPTION OF THE DRAWINGS

Above and additional aspects and advantages of embodiments of the disclosure will become apparent and more readily appreciated from the following descriptions made with reference to the accompanying drawings.
FIG. 1 is a flowchart of a transmission mode switching method provided by an embodiment of the disclosure.
FIG. 2 is a flowchart of a transmission mode switching method provided by an embodiment of the disclosure.
FIG. 3 is a flowchart of a transmission mode switching method provided by an embodiment of the disclosure.
FIG. 4 is a flowchart of a transmission mode switching method provided by an embodiment of the disclosure.
FIG. 5 is a flowchart of a transmission mode switching method provided by an embodiment of the disclosure.
FIG. 6 is a flowchart of a transmission mode switching method provided by an embodiment of the disclosure.
FIG. 7 is a flowchart of a transmission mode switching method provided by an embodiment of the disclosure.
FIG. 8 is a flowchart of a transmission mode switching method provided by an embodiment of the disclosure.
FIG. 9 is a block diagram of a transmission mode switching device provided by an embodiment of the disclosure.
FIG. 10 is a block diagram of a transmission mode switching device provided by an embodiment of the disclosure.
FIG. 11 is a block diagram of a user equipment (UE) provided by an embodiment of the disclosure.
FIG. 12 is a block diagram of a network side device provided by an embodiment of the disclosure.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of embodiments do not represent all implementations consistent with embodiments of the disclosure. Instead, they are merely examples of devices and methods consistent with aspects related to embodiments of the disclosure as recited in the appended claims.

The terms used in embodiments of the disclosure are only for the purpose of describing specific embodiments, and are not intended to limit embodiments of the disclosure. The singular forms of "a" and "the" used in embodiments of the disclosure and appended claims are also intended to include plural forms, unless the context clearly indicates other meanings. It should also be understood that the term "and/or" as used herein refers to and includes any or all possible combinations of one or more associated listed items.

It is understandable that although the terms "first", "second", and "third" may be used in embodiments of the disclosure to describe various information, the information should not be limited to these terms. These terms are only used to distinguish the same type of information from each other. For example, without departing from the scope of embodiments of the disclosure, the first information may also be referred to as the second information, and similarly, the second information may also be referred to as the first information. Depending on the context, the term "if' as used herein can be interpreted as "when", "while" or "in response to determining".

Embodiments of the disclosure are described in detail below, and examples of which are illustrated in the accompanying drawings, in which the same or similar symbols indicate the same or similar elements. Embodiments described below with reference to the accompanying drawings are exemplary and are intended to be used to explain the disclosure and are not to be construed as a limitation of the disclosure.

A transmission mode switching method, a transmission mode switching device, a user equipment (UE), a network side device and a storage medium provided in embodiments of the disclosure are described in detail below with reference to the accompanying drawings.

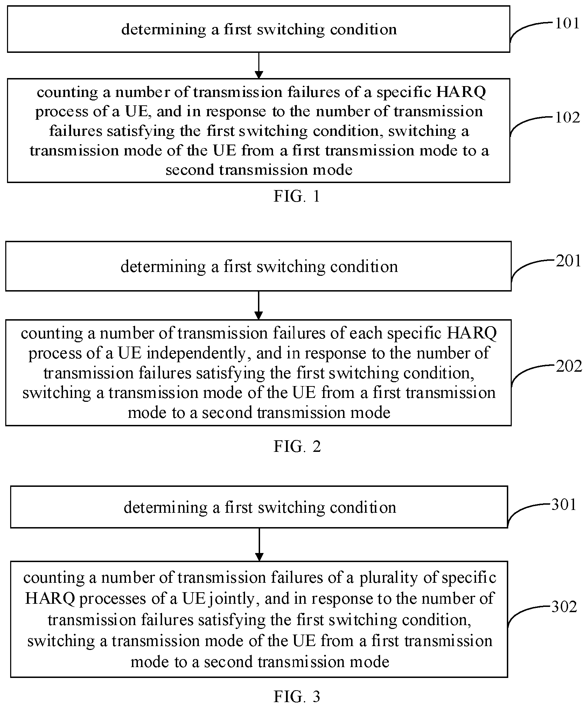

FIG. 1 is a flowchart of a transmission mode switching method provided by an embodiment of the disclosure. The method is performed by a UE. As illustrated in FIG. 1, the transmission mode switching method includes the following steps.

At step 101, a first switching condition is determined.

It is noted that the method can be performed by any UE. The UE may be a device that provides voice and/or data connectivity to a user. The UE may communicate with one or more core networks via a Radio Access Network (RAN). The UE may be an Internet of Things (IoT) UE, such as a sensor device, a cell phone (or a "cellular" phone), and a computer with an IoT UE. The UE may also be a stationary, portable, pocket-sized, handheld, computer-built, or vehicle-mounted device, such as, a Station (STA), a subscriber unit, a subscriber station, a mobile station, a mobile, a remote station, an access point, a remote terminal, an access terminal, a user terminal, or a user agent. Or, the UE may be an unmanned aerial vehicle device. Or, the UE may be an in-vehicle device, for example, an electronic control unit (ECU) having a wireless communication function, or a wireless terminal external to the ECU. Or, the UE can also be a roadside device, for example, a street light, a signal light, or other roadside devices having the wireless communication function.

In an embodiment of the disclosure, the first switching condition may include that a number of transmission failures of a specific hybrid automatic repeat request (HARQ) process of the UE is greater than or equal to a first threshold. The first threshold may be pre-set, and the first threshold may be greater than or equal to 1. For example, the first threshold may be 1.

In an embodiment of the disclosure, the above-mentioned specific HARQ process may include one or more HARQ processes among all HARQ processes currently performed by the UE. The specific HARQ process may be a HARQ process for subsequently counting the number of transmission failures.

In an embodiment of the disclosure, the specific HARQ process described above may include at least one of the following types.

The first type is a HARQ process specified by a network side device or agreed upon by a protocol.

For example, in an embodiment of the disclosure, if the HARQ processes currently performed by the UE include: a HARQ process-1 and a HARQ process-2, the network side device may specify the HARQ process-1 of the UE as the specific HARQ process.

The second type is a HARQ process corresponding to at least one configured uplink grant configuration specified by a network side device or agreed upon by a protocol.

For example, in an embodiment of the disclosure, if the network side device configures two Configured (uplink) Grant (CG) configurations for a logical channel of the UE, namely, a CG-1 configuration and a CG-2 configuration, the CG-1 configuration corresponds to a HARQ process-1 and a HARQ process-2, and the CG-2 configuration corresponds to a HARQ process-3 and a HARQ process-4. On this basis, the network side device may specify the HARQ processes corresponding to the CG-1 configuration and the CG-2 configuration, i.e., the HARQ process-1, the HARQ process-2, the HARQ process-3 and the HARQ process-4, as the specific HARQ processes.

The third type is a HARQ process corresponding to data that corresponds to a specific identifier (i.e., a HARQ process for transmitting the data corresponding to the specific identifier).

In an embodiment of the disclosure, the above specific identifier may be assigned by the network side device. In another embodiment of the disclosure, the above specific identifier may be agreed upon by a protocol. In an embodiment of the disclosure, the above specific identifier may include at least one of the following:
a bearer identifier (e.g., Data Radio Bearer-1 (DRB-1));
a logical channel identifier (e.g., Logical CHannel-1 (LCH-1));
a cell group identifier (e.g., Master Cell Group (MCG) or Secondary Cell Group (SCG));
a bearer type identifier (e.g., split bearer, MCG bearer, or SCG bearer); or
an identifier of changing a data transmission mode (e.g., a survival time state identifier).

In an embodiment of the disclosure, determining the first switching condition includes at least one of the following:
determining the first switching condition based on a protocol; or
obtaining the first switching condition indicated by a network side device.

Therefore, it can be seen that in an embodiment of the disclosure, the UE can determine, based on the protocol and/or the indication of the network side device, the specific HARQ process for which the number of transmission failures is to be counted subsequently. Whether the UE switches the transmission mode can be determined directly based on a counting result of the number of transmission failures of the specific HARQ process and the first switching condition. That is, embodiments of the disclosure specify the number(s) of data transmission failures of which specific HARQ process(es) is used for determining whether to switch the transmission mode, which solves the technical problem in the related art of "unable to determine the number(s) of data transmission failures of which specific HARQ process(es) is to be counted to determine whether to switch the transmission mode".

At step 102, the number of transmission failures of the specific HARQ process of the UE is counted, and in response to the number of transmission failures satisfying the first switching condition, a transmission mode of the UE is switched from a first transmission mode to a second transmission mode.

In an embodiment of the disclosure, the UE may only count the number of transmission failures for the specific HARQ process without having to count the number of transmission failures for other HARQ processes.

For example, in an embodiment of the disclosure, all the HARQ processes currently performed by the UE include a HARQ process-1, a HARQ process-2, a HARQ process-3 and a HARQ process-4, and the specific HARQ processes are the HARQ process-1 and the HARQ process-2, the UE may only count the numbers of transmission failures of the HARQ process-1 and the HARQ process-2, and does not need to count the numbers of transmission failures of the HARQ process-3 and the HARQ process-4.

In an embodiment of the disclosure, if the UE has a plurality of specific HARQ processes, the UE may count the number of transmission failures of each specific HARQ process independently. In another embodiment of the disclosure, if the UE has a plurality of specific HARQ processes, the UE may count the number of transmission failures corresponding to the plurality of specific HARQ processes jointly, and details about this part can be referred to the following description of embodiments.

In addition, it is noted that, in an embodiment of the disclosure, the aforementioned number of transmission failures may be a number of consecutive failures. When the number of consecutive failures of the specific HARQ process is greater than or equal to the first threshold, it is determined that the number of transmission failures of the UE satisfies the first switching condition.

In an embodiment of the disclosure, when the counted number of transmission failures satisfies the first switching condition, it means that multiple transmission failures have already occurred under the first transmission mode and an application service of the first transmission mode may be in an unavailable state. At this time, if the first transmission mode is still used for data transmission, data transmission may still be failed, and thus the transmission mode of the UE may be switched from the first transmission mode to the second transmission mode. A data replication function of the second transmission mode is greater than a data replication function of the first transmission mode. That is, a probability of successful data transmission in the second transmission mode is greater than a probability of successful data transmission in the first transmission mode. After switching the transmission mode of the UE from the first transmission mode to the second transmission mode, the UE enters a survival time state to ensure a success rate of subsequent data transmission.

In an embodiment of the disclosure, switching the transmission mode of the UE from the first transmission mode to the second transmission mode may include at least one of the following methods.

The first method is to activate a data replication function of a specific bearer.

In an embodiment of the disclosure, the above-mentioned specific bearer may be a bearer currently used by the UE to transmit data. The bearer may be a DRB and/or a Signaling Radio Bearer (SRB). In an embodiment of the disclosure, the data replication function may be a Packet Data Convergence Protocol (PDCP) data replication function.

In an embodiment of the disclosure, for the first method, if the data replication function of the specific bearer is currently in an activated state, when the UE switches the transmission mode from the first transmission mode to the second transmission mode based on the first method, the UE can keep the data replication function of the specific bearer in the activated state. If the data replication function of the specific bearer is currently in a deactivated state, when the UE switches the transmission mode from the first transmission mode to the second transmission mode based on the first method, the UE can activate part of or all the radio link control (RLC) entities associated with the specific bearer. As a result, the PDCP entity of the UE can replicate the transmitted data and send the replicated data to each activated RLC entity respectively, and then the data is transmitted to the base station.

In an embodiment of the disclosure, when using the first method to switch the transmission mode, which RLC entities associated with the specific bearer are activated can be determined based on an indication from the network side device. In another embodiment of the disclosure, when using the first method to switch the transmission mode, which RLC entities associated with the specific bearer are activated can be determined based on an agreement of a protocol.

For example, in an embodiment of the disclosure, the specific bearer is a DRB-1, the UE may determine to activate all the RLC entities of the DRB-1 based on an agreement of a protocol when the first method is used to switch the transmission mode.

The second method is to change a number of RLC entities in an activated state corresponding to a specific bearer.

In an embodiment of the disclosure, for the second method, changing the number of RLC entities in the activated state corresponding to the specific bearer may be: increasing the number of RLC entities in the activated state corresponding to the specific bearer. The increased number of activated RLC entities may be determined based on an agreement of a protocol and/or an indication from a network side device.

For example, in an embodiment of the disclosure, the specific bearer is the DRB-1, the number of PDCP-associated RLC entities of the DRB-1 is 4, and the number of activated RLC entities of the DRB-1 under the first transmission mode is 2. If it is determined that the UE satisfies the above mentioned first switching condition and intends to switch the transmission mode of the UE from the first transmission mode to the second transmission mode, the UE can switch the transmission mode to the second transmission mode by adding 1 activated RLC entity (i.e., making the total number of activated RLC entities of DRB-1 to be 3).

In another embodiment of the disclosure, for the second method, changing the number of RLC entities in the activated state corresponding to the specific bearer may be that the UE determines a specified number based on at least one of an indication from a network side device, an agreement of a protocol, or an autonomous determination by the UE itself. When switching the transmission mode from the first transmission mode to the second transmission mode by utilizing the second method described above, if the number of RLC entities in the activated state corresponding to the specific bearer under the first transmission mode is less than the specified number, the terminal increases the number of activated RLC entities to the specified number. If the number of RLC entities in the activated state corresponding to the specific bearer under the first transmission mode is equal to the specified number, the UE maintains the number of currently activated RLC entities. If the number of RLC entities in the activated state corresponding to the specific bearer under the first transmission mode is greater than the specified number, the UE maintains the number of currently activated RLC entities or reduces the number of activated RLC entities to the specified number.

For example, in an embodiment of the disclosure, the specific bearer is the DRB-1, and the number of RLC entities associated with the DRB-1 is 4, namely, a RLC-1, a RLC-2, a RLC-3, and a RLC-4, and the specified number is 3.

Under the first transmission mode, the number of activated RLC entities is 2, i.e., the RLC-1 and the RLC-2.When it is determined that the UE satisfies the first switching condition and intends to switch the transmission mode from the first transmission mode to the second transmission mode, since the number of RLC entities that are currently activated is 2, which is less than the specified number of 3, the UE may increase the number of activated RLC entities to 3. That is, the UE may activate another RLC entity other than the RLC-1 and the RLC-2, such as a RLC-3.

Under the first transmission mode, the number of activated RLC entities is 3, namely, the RLC-1, the RLC-2 and the RLC-3. When it is determined that the UE satisfies the first switching condition and intends to switch the transmission mode from the first transmission mode to the second transmission mode, since the number of currently activated RLC entities is 3, which is equal to the specified number of 3, the UE may maintain the number of currently activated RLC entities.

Under the first transmission mode, the number of activated RLC entities is 4, namely, the RLC-1, the RLC-2, the RLC-3 and a RLC-4. When it is determined that the UE satisfies the first switching condition and intends to switch the transmission mode from the first transmission mode to the second transmission mode, since the number of currently activated RLC entities is 4, which is greater than the specified number of 3, the UE may maintain the number of currently activated RLC entities or reduce the number of activated RLC entities to the specified number of 3. For example, the UE may activate only the RLC-1, the RLC-2 and the RLC-3.

The third method is to activate a designated first RLC entity.

In an embodiment of the disclosure, the first RCL entity may include at least one RLC entity. In an embodiment of the disclosure, the first RLC entity may be determined based on an indication from a network side device. In another embodiment of the disclosure, the first RLC entity may be determined based on an agreement of a protocol.

In an embodiment of the disclosure, when the transmission mode of the UE is switched from the first transmission mode to the second transmission mode based on the third method, if the RLC entity activated under the first transmission mode is the same as the first RLC entity, the currently activated RLC entity is kept unchanged, and if the RLC entity activated under the first transmission mode is different from the first RLC entity, it is changed to activate the first RLC entity.

For example, in an embodiment of the disclosure, the specific bearer is the DRB-1, the number of RLC entities associated with the DRB-1 is 4, namely, the RLC-1, the RLC-2, the RLC-3 and the RLC-4, and the first RLC entities are the RLC-1, the RLC-2 and the RLC-3. Under the first transmission mode, the activated RLC entities are the RLC-1, the RLC-2 and the RLC-4. At this time, when it is determined that the UE satisfies the first switching condition and intends to switch the transmission mode from the first transmission mode to the second transmission mode, since the currently activated RLC entities are different from the first RLC entities, it is changed to activate the first RLC entities.

The fourth method is to change a type of an available uplink grant configuration of a specific logical channel of a specific bearer.

In an embodiment of the disclosure, changing the type of the available uplink grant configuration of the specific logical channel of the specific bearer may include the following methods.

Method a is to determine that a subcarrier spacing (SCS) of an uplink grant configuration available to the second transmission mode includes all types of SCS.

For example, in an embodiment of the disclosure, if an available uplink grant configuration of the specific logical channel LCH-1 of the specific bearer DRB-1 under the first transmission mode is an uplink grant configuration of SCS=15KHz, when switching the transmission mode from the first transmission mode to the second transmission mode using the above mentioned method a, the UE can make all types of SCS of uplink grant configuration to be available to the specific logical channel LCH-1 of the specific bearer DRB-1.

Method b is to determine that a SCS of an uplink grant configuration available to the second transmission mode includes an SCS whose value is greater than an SCS value used by the first transmission mode.

For example, in an embodiment of the disclosure, if an available uplink grant configuration of the specific logical channel LCH-1 of the specific bearer DRB-1 under the first transmission mode is an uplink grant configuration of SCS=15KHz, when switching the transmission mode from the first transmission mode to the second transmission mode using the above mentioned method b, the UE can make all uplink grant configurations of SCS=30KHz to be available to the specific logical channel LCH-1 of the specific bearer DRB-1.

Method c is to determine that a duration of a physical uplink shared channel (PUSCH) corresponding to an uplink grant configuration available to the second transmission mode includes all PUSCH durations.

For example, in an embodiment of the disclosure, if an available uplink grant configuration of the specific logical channel LCH-1 of the specific bearer DRB-1 under the first transmission mode is an uplink grant configuration in which a duration of the PUSCH is less than or equal to 7 Orthogonal Frequency Division Multiplexing (OFDM) symbols, when adopting the above-described method c to switch the transmission mode from the first transmission mode to the second transmission mode, the UE can make uplink grant configurations of all PUSCH durations to be available to the specific logical channel LCH-1 of the specific bearer DRB-1.

Method d is to determine that the second transmission mode is capable to use an uplink grant configuration type-1 (Configured Grant Type-1).

For example, in an embodiment of the disclosure, if the specific logical channel LCH-1 of the specific bearer DRB-1 under the first transmission mode is unable to use the Configured uplink Grant Type-1, when switching the transmission mode from the first transmission mode to the second transmission mode adopting the above mentioned method d, the UE can make the Configured uplink Grant Type-1 to be available to the specific logical channel LCH-1 of the specific bearer DRB-1.

Method e is to determine that the second transmission mode is capable to use uplink grant configurations of all cells.

For example, in an embodiment of the disclosure, if the uplink grant configuration available to the specific logical channel LCH-1 of the specific bearer DRB-1 under the first transmission mode is an uplink grant configuration of a cell-1, when switching the transmission mode from the first transmission mode to the second transmission mode using the above mentioned method e, the UE can make the uplink grant configurations of all cells to be available to the specific logical channel LCH-1 of the specific bearer DRB-1.

Method f is to determine that the second transmission mode is capable to use an uplink grant configuration of a designated cell.

In an embodiment of the disclosure, the designated cell may be determined based on a protocol agreement. In another embodiment of the disclosure, the designated cell may be determined based on an indication from a network side device. The designated cell may be a cell-x (e.g., a Primary cell (PCell) or a Primary Secondary cell (PSCell)), with x being a positive integer.

For example, in an embodiment of the disclosure, the designated cell is a cell-2. If the uplink grant configuration available to the specific logical channel LCH-1 of the specific bearer DRB-1 under the first transmission mode is an uplink grant configuration of a cell-1, when switching the transmission mode from the first transmission mode to the second transmission mode using the above mentioned method f, the UE can make an uplink grant configuration of the cell-2 to be available to the specific logical channel LCH-1 of the specific bearer DRB-1.

Method g is to determine that the second transmission mode is capable to use all resources of an uplink grant configuration type-2 (Configured Grant Type-2).

For example, in an embodiment of the disclosure, the network side device configures multiple sets of resources of the Configured uplink Grant Type-2 for the UE, namely, Configured uplink Grant Type-2 resource-1 and Configured uplink Grant Type-2 resource-2. If the uplink grant configuration available to the specific logical channel LCH-1 of the specific bearer DRB-1 under the first transmission mode is the Configured uplink Grant Type-2 resource-1, when the UE adopts the above method g to switch the transmission mode from the first transmission mode to the second transmission mode, the UE may make all the resources of the uplink grant configuration type-2 to be available to the specific logical channel LCH-1 of the specific bearer DRB-1. That is, the Configured uplink Grant Type-2 resource-1 and the Configured uplink Grant Type-2 resource-2 can be used.

Method h is to determine that the second transmission mode is capable to use uplink grant configurations of all physical priorities.

For example, in an embodiment of the disclosure, if the uplink grant configuration available to the specific logical channel LCH-1 of the specific bearer DRB-1 under the first transmission mode is an uplink grant configuration of physical priority-1, when the UE adopts the above mentioned method h to switch the transmission mode from the first transmission mode to the second transmission mode, the UE can make the uplink grant configurations of all physical priorities to be available to the specific logical channel LCH-1 of the specific bearer DRB-1.

It can be seen that in an embodiment of the disclosure, when the UE counts the number of transmission failures of the specific HARQ process and determines that the number of transmission failures of the specific HARQ process satisfies the first switching condition, it can switch the transmission mode from the first transmission mode to the second transmission mode by executing any of the above-described first method to the fourth method.

In conclusion, in a transmission mode switching method provided in embodiments of the disclosure, the UE determines the first switching condition including that the number of transmission failures of a specific HARQ process of the UE is greater than or equal to the first threshold. The UE counts the number of transmission failures of the specific HARQ process, and in response to the number of transmission failures satisfying the first switching condition, a transmission mode of the UE is switched from the first transmission mode to the second transmission mode. In this way, in an embodiment of the disclosure, the specific HARQ process(es) can be defined in the first switching condition determined by the UE, and the UE may count the number(s) of transmission failures of the specific HARQ process(es) based on the first switching condition to determine whether to switch the transmission mode. In the method of the disclosure, the specific HARQ process(es) for which the number(s) of transmission failures is to be counted by the UE may be defined. Therefore, for a UE having multiple HARQ processes, the number(s) of data transmission failures of which specific HARQ process(es) is used for determining whether to switch the transmission mode is defined, thus solving the technical problem in the related art of "unable to determine the number(s) of data transmission failures of which specific HARQ process(es) is to be counted to determine whether to switch the transmission mode". Therefore, the UE and the network side device have a consistent understanding of the condition for entering a survival time state (i.e., switching to the second transmission mode).

FIG. 2 is a flowchart of a transmission mode switching method provided by an embodiment of the disclosure. The method is performed by a UE. As illustrated in FIG. 2, the transmission mode switching method includes the following steps.

At step 201, a first switching condition is determined.

For the relevant introduction of step 201, reference can be made to the descriptions of the above embodiments, which will not be repeated here in embodiments of the disclosure.

At step 202, a number of transmission failures of each specific HARQ process of the UE is counted independently, and in response to the number of transmission failures satisfying the first switching condition, a transmission mode of the UE is switched from a first transmission mode to a second transmission mode.

In an embodiment of the disclosure, counting the number of transmission failures of each specific HARQ process of the UE independently may include that each specific HARQ process corresponds to a counter for counting the number of transmission failures. In response to an occurrence of a data transmission failure of a certain specific HARQ process, the number of the counter for counting the number of transmission failures corresponding to the certain specific HARQ process is increased by one.

For example, in an embodiment of the disclosure, the specific HARQ processes are a HARQ process-1 and a HARQ process-2, and the HARQ process-1 and the HARQ process 2 each corresponds to one counter. In response to an occurrence of a data transmission failure of the HARQ process-1, the number of the counter for counting the number of transmission failures corresponding to the HARQ process-1 is increased by one, and in response to an occurrence of a data transmission failure of the HARQ process-2, the number of the counter for counting the number of transmission failures corresponding to the HARQ process-2 is increased by one.

It is noted that in an embodiment of the disclosure, a method for determining the number of transmission failures of the specific HARQ process of the UE includes at least one of the following:
in response to receiving a data retransmission indication of the specific HARQ process sent by a network side device, determining that one transmission failure occurs; or
in response to receiving a data reception failure indication of the specific HARQ process sent by a network side device, determining that one transmission failure occurs.

In an embodiment of the disclosure, the data retransmission indication or the data reception failure indication described above may be sent to the UE by the network side device via a Downlink Control Information (DCI) signaling.

In an embodiment of the disclosure, counting the number of transmission failures of each specific HARQ process independently may include counting the number of transmission failures of each specific HARQ process starting from the first transmission of new data for each specific HARQ process.

For example, in an embodiment of the disclosure, when the number of transmission failures of data 1 for the specific HARQ process-1 is to be counted, counting starts from the first transmission of the data 1 for the specific HARQ process-1. During a process of transmitting the data 1 by the specific HARQ process-1, when the specific HARQ process-1 receives a data retransmission indication sent by the network side device, the number of the counter for counting the number of transmission failures corresponding to the specific HARQ process-1 is increased by 1. If the specific HARQ process-1 starts to transmit data 2, the number of the counter for counting the number of transmission failures corresponding to the specific HARQ process-1 is set to an initial value, which may be 0.

In another embodiment of the disclosure, counting the number of transmission failures of each specific HARQ process independently may include counting the number of transmission failures of each specific HARQ process starting from the first transmission of new data for each specific HARQ process over a configured uplink grant configuration.

In detail, in an embodiment of the disclosure, the HARQ process includes a HARQ process transmitted on a configured uplink grant configuration, and/or, a HARQ process transmitted on a dynamically scheduled uplink grant configuration. The configured uplink grant (CG) configuration described above is configured by the network side device to the UE, and the type of the CG configuration is periodic. There may be multiple CG configurations configured by the network side device to the UE. The network side device can select one or more CG configurations from the multiple CG configurations for the UE to use. Moreover, the dynamically scheduled (dynamic grant, DG) uplink grant configuration is also configured by the network side device to the UE, and is dynamically scheduled based on a signaling (e.g., a DCI signaling).

On this basis, in an embodiment of the disclosure, counting the number of transmission failures of each specific HARQ process starting from the first transmission of new data for each specific HARQ process on the CG configuration may include the following method.

The network side device configures the UE with a CG configuration, i.e., a CG-1 configuration, and a specific HARQ process-1 can use the CG-1 configuration to transmit data. In addition to using the CG-1 to transmit data, the specific HARQ process-1 can use the dynamically scheduled uplink grant configuration to transmit data. When counting the number of transmission failures of the specific HARQ process-1, it may be started from the first transmission of new data for the HARQ process-1 on the CG-1 configuration.

In an embodiment of the disclosure, counting the number of transmission failures of each specific HARQ process independently may include counting the number of transmission failures of each specific HARQ process starting from the first transmission of new data for each specific HARQ process on a dynamically scheduled uplink grant configuration.

It is noted that in an embodiment of the disclosure, when counting the number of transmission failures of each specific HARQ process of the UE independently, if the number of transmission failures of any specific HARQ process is greater than or equal to the first threshold, it is determined that the first switching condition is satisfied.

A detailed description of "switching the transmission mode of the UE from the first transmission mode to the second transmission mode" at step 202 can be described with reference to the above embodiments, which will not be repeated herein.

In conclusion, in a transmission mode switching method provided in embodiments of the disclosure, the UE determines the first switching condition including that the number of transmission failures of a specific HARQ process of the UE is greater than or equal to the first threshold. The UE counts the number of transmission failures of the specific HARQ process, and in response to the number of transmission failures satisfying the first switching condition, a transmission mode of the UE is switched from the first transmission mode to the second transmission mode. In this way, in an embodiment of the disclosure, the specific HARQ process(es) can be defined in the first switching condition determined by the UE, and the UE may count the number(s) of transmission failures of the specific HARQ process(es) based on the first switching condition to determine whether to switch the transmission mode. In the method of the disclosure, the specific HARQ process(es) for which the number(s) of transmission failures is to be counted by the UE may be defined. Therefore, for a UE having multiple HARQ processes, the number(s) of data transmission failures of which specific HARQ process(es) is used for determining whether to switch the transmission mode is defined, thus solving the technical problem in the related art of "unable to determine the number(s) of data transmission failures of which specific HARQ process(es) is to be counted to determine whether to switch the transmission mode".

FIG. 3 is a flowchart of a transmission mode switching method provided by an embodiment of the disclosure. The method is performed by a UE. As illustrated in FIG. 3, the transmission mode switching method includes the following steps.

At step 301, a first switching condition is determined.

A related description of step 301 can be referred to the above description of embodiments, which will not be repeated herein.

At step 302, a number of transmission failures of a plurality of specific HARQ processes is counted jointly, and in response to the number of transmission failures satisfying the first switching condition, a transmission mode of the UE is switched from a first transmission mode to a second transmission mode.

In an embodiment of the disclosure, counting the number of transmission failures of the plurality of specific HARQ processes of the UE jointly may be as follows. The plurality of specific HARQ processes correspond to one counter for counting the number of transmission failures, and in response to an occurrence of a data transmission failure of any specific HARQ process, the number of the counter for counting the number of transmission failures is increased by 1.

For example, in an embodiment of the disclosure, the specific HARQ processes are a HARQ process-1 and a HARQ process-2, and the HARQ process-1 and the HARQ process-2 correspond to one counter. In response to an occurrence of a data transmission failure of the HARQ process-1 or an occurrence of a data transmission failure of the HARQ process-2, the number of the counter is increased by 1.

It is noted that, in an embodiment of the disclosure, a method for determining the number of transmission failures includes at least one of the following:

in response to receiving a data retransmission indication of the specific HARQ process sent by a network side device, determining that one transmission failure occurs; or

in response to receiving a data reception failure indication of the specific HARQ process sent by a network side device, determining that one transmission failure occurs.

In an embodiment of the disclosure, the above data retransmission indication and the data reception failure indication may be sent by the network side device to the UE via a DCI signaling.

In an embodiment of the disclosure, when jointly counting the plurality of specific HARQ processes, the number of transmission failures of the plurality of specific HARQ processes is counted starting from the first transmission of new data for a specific HARQ process firstly occurring in the plurality of specific HARQ processes.

For example, in an embodiment of the disclosure, the number of transmission failures of the data 1 for the specific HARQ process-1 and the specific HARQ process-2 is to be counted, and the specific HARQ process-1 occurs before the specific HARQ process-2. The counting may start from the first transmission of the data 1 for the specific HARQ process-1. In the course of counting, when the specific HARQ process-1 receives a data retransmission indication sent by the network side device, or, when the specific HARQ process-2 receives a data retransmission indication sent by the network side device, the number of the counter for counting the number of transmission failures is increased by 1.

In another embodiment of the disclosure, when jointly counting the plurality of specific HARQ processes, the number of transmission failures of each specific HARQ process may be counted starting from the first transmission of new data over a configured uplink grant configuration for the specific HARQ process first occurring in the plurality of specific HARQ processes.

For example, in an embodiment of the disclosure, the number of transmission failures of the data 1 for the specific HARQ process-1 and the specific HARQ process-2 may be counted, and the specific HARQ process-1 occurs before the specific HARQ process-2. The network side device configures a configured uplink grant configuration for the UE, i.e., a CG-1 configuration. The specific HARQ process-1 can use the CG-1 configuration to transmit data. In addition to using the CG-1 configuration to transmit data, the specific HARQ process-1 can use the dynamically scheduled uplink grant configuration to transmit data. When counting the number of transmission failures of the specific HARQ process-1 and the specific HARQ process-2 jointly, counting may be started from the first transmission of the new data in the HARQ process-1 on the CG-1 configuration.

In another embodiment of the disclosure, when jointly counting the number of transmission failures of the plurality of specific HARQ processes, counting the number of transmission failures of each specific HARQ process may be started from the first transmission of the new data for the specific HARQ process first occurring in the plurality of specific HARQ processes on the dynamically scheduled uplink grant configuration.

A detailed description of "switching the transmission mode of the UE from the first transmission mode to the second transmission mode" at step 302 can be referred to the description of the above embodiments, which will not be repeated herein.

In conclusion, in a transmission mode switching method provided in embodiments of the disclosure, the UE determines the first switching condition including that the number of transmission failures of a specific HARQ process of the UE is greater than or equal to the first threshold. The UE counts the number of transmission failures of the specific HARQ process, and in response to the number of transmission failures satisfying the first switching condition, a transmission mode of the UE is switched from the first transmission mode to the second transmission mode. In this way, in an embodiment of the disclosure, the specific HARQ process(es) can be defined in the first switching condition determined by the UE, and the UE may count the number(s) of transmission failures of the specific HARQ process(es) based on the first switching condition to determine whether to switch the transmission mode. In the method disclosed in the disclosure, the specific HARQ process(es) for which the number(s) of transmission failures is to be counted by the UE may be defined. Therefore, for a UE having multiple HARQ processes, the number(s) of data transmission failures of which specific HARQ process(es) is used for determining whether to switch the transmission mode is defined, which solves the technical problem in the related art of "unable to determine the number(s) of data transmission failures of which specific HARQ process(es) is to be counted to determine whether to switch the transmission mode".

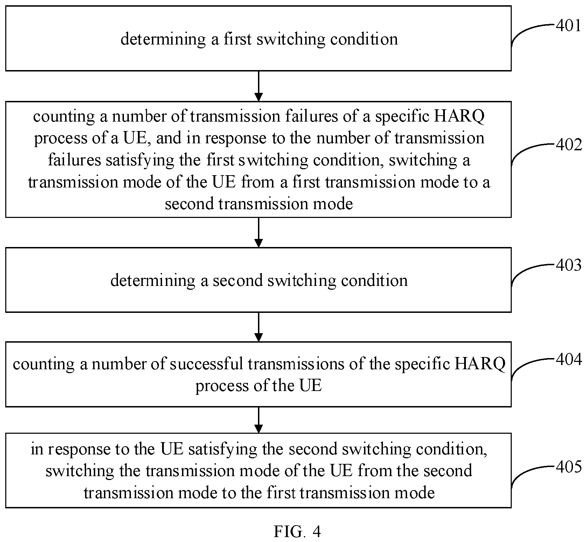

FIG. 4 is a flowchart of a transmission mode switching method provided by an embodiment of the disclosure. The method is performed by a UE. As illustrated in FIG. 4, the transmission mode switching method includes the following steps.

At step 401, a first switching condition is determined.

At step 402, a number of transmission failures of a specific HARQ process is counted, and in response to the number of transmission failures satisfying the first switching condition, a transmission mode of the UE is switched from a first transmission mode to a second transmission mode.

The relevant descriptions of steps 401-402 can be described with reference to the above description of embodiments, which will not be repeated herein.

At step 403, a second switching condition is determined.

It is noted that in an embodiment of the disclosure, after the transmission mode of the UE is switched from the first transmission mode to the second transmission mode at step 402, the transmission mode may be switched back to the first transmission mode from the second transmission mode in subsequent processes. Based on this, a second switching condition is set, and the second switching condition is a condition for instructing the UE to switch the transmission mode back to the first transmission mode from the second transmission mode.

In an embodiment of the disclosure, the second switching condition may include at least one of the following:
receiving switching indication information from a network side device, the switching indication information is used to instruct the UE to switch from the second transmission mode to the first transmission mode; or
a number of successful transmissions of the specific HARQ process of the UE being greater than or equal to a second threshold. In an embodiment of the disclosure, the second threshold may be preset, and the second threshold may be greater than or equal to 1. For example, the second threshold may be 10.

In an embodiment of the disclosure, the switching indication information includes at least one of the following:
first indication information indicating to exit the second transmission mode;
second indication information indicating to restore the first transmission mode;
third indication information indicating to restore a data transmission state configured by radio resource control (RRC);
fourth indication information indicating to switch to a data transmission state before switching to the second transmission mode;
a bearer identifier (e.g., DRB-1);
a logical channel identifier (e.g., LCH-1);
a cell group identifier (e.g., MCG or SCG);
a bearer type identifier (e.g., split bearer, MCG bearer or SCG bearer);
a HARQ process identifier (e.g., HARQ process-1); or
a configured uplink grant configuration identifier (e.g., configured grant configuration-1).

In an embodiment of the disclosure, the second switching condition may be determined based on an indication form a network side device. In another embodiment of the disclosure, the second switching condition may be determined based on a protocol agreement.

In detail, in an embodiment of the disclosure, when the second switching condition is receiving the switching indication information sent by the network side device, the second switching condition may be determined based on the indication of the network side device. When the second switching condition is that the number of successful transmissions of a specific HARQ process of the UE is greater than or equal to the second threshold, the second switching condition may be determined based on the indication of the network side device, and/or, based on a protocol agreement.

At step 404, a number of successful transmissions of the specific HARQ process of the UE is counted.

In an embodiment of the disclosure, the UE may only count the number of successful transmissions of the specific HARQ process and does not need to count the number of successful transmissions of other HARQ processes.

For example, in an embodiment of the disclosure, all HARQ processes currently being performed by the UE include a HARQ process-1, a HARQ process-2, a HARQ process-3 and a HARQ process-4, and the specific HARQ processes are the HARQ process-1 and the HARQ process-2. The UE may only count the number of successful transmissions of the HARQ process-1 and the HARQ process-2, and does not need to count the number of successful transmissions of the HARQ process-3 and the HARQ process-4.

In an embodiment of the disclosure, when the UE has a plurality of specific HARQ processes, the UE may independently count the number of successful transmissions of each specific HARQ process. In another embodiment of the disclosure, when the UE has a plurality of specific HARQ processes, the UE may jointly count the number of successful transmissions of the plurality of specific HARQ processes. The detailed description of this section can be referred to the following description of embodiments.

At step 405, in response to the UE satisfying the second switching condition, the transmission mode of the UE is switched from the second transmission mode to the first transmission mode.

It is noted that, in an embodiment of the disclosure, when the above second switching condition is that the number of successful transmissions of the specific HARQ process of the UE is greater than or equal to the second threshold, the above number of successful transmissions may refer to the number of consecutive successful transmissions. For example, the UE transmits new data for a (greater than the second threshold) times consecutively through the specific HARQ process-1 using the resource of the CG-1 configuration, during which no data transmission failure indication (or, data retransmission indication) is received, it is determined that the number of successful transmissions of the specific HARQ process of the UE satisfies the second preset condition.

If the above second switching condition is receiving the indication sent by the network side device, when the UE receives the indication sent by the network side device, it is determined that the UE satisfies the second switching condition.

In an embodiment of the disclosure, the above-described method of switching the transmission mode of the UE from the second transmission mode to the first transmission mode may include at least one of the following methods.

In method 1, a data replication function of a specific bearer is deactivated.

In an embodiment of the disclosure, the specific bearer described above may be a bearer currently used by the UE to transmit data, which may be a DRB and/or an SRB. In an embodiment of the disclosure, the data replication function described above may be a PDCP data replication function.

For example, in an embodiment of the disclosure, the PDCP data replication function of the specific bearer DRB-1 under the second transmission mode is currently in an activated state, the PDCP data replication function of the DRB 1 may be de-activated when the UE satisfies the second switching condition and method 1 is used to switch the transmission mode of the UE from the second transmission mode to the first transmission mode.

In method 2, a number of RLC entities in an activated state corresponding to a specific bearer is reduced.

For example, the number of RLC entities associated with the PDCP of the specific bearer DRB-1 is 4, and the number of activated RLC entities of the specific bearer DRB-1 under the second transmission mode is 3. When the UE satisfies the second switching condition and method 2 is used to switch the transmission mode of the UE from the second transmission mode to the first transmission mode, the UE may reduce the number of activated RLC entities by 1 (i.e., the total number of activated RLC entities of the specific bearer DRB-1 is reduced to 2).

In method 3, a specified second RLC entity is activated.

In an embodiment of the disclosure, the second RCL entity may include at least one RLC entity. In an embodiment of the disclosure, the second RLC entity may be determined based on an indication of a network side device. In another embodiment of the disclosure, the second RLC entity may be determined based on a protocol agreement.

For example, in an embodiment of the disclosure, the number of RLC entities associated with the PDCP of the specific bearer DRB-1 is 4, namely, a RLC entity-1, a RLC entity-2, a RLC entity-3 and a RLC entity-4, and the second RLC entity is the RLC entity-1. If the activated RLC entities are the RLC entity-1, the RLC entity-2, and the RLC entity-3 under the second transmission condition, when the UE satisfies the second switching condition and the method 3 is used to switch the transmission mode of the UE from the second transmission mode to the first transmission mode, only RLC entity-1 may be activated.

In method 4, a type of an available uplink grant configuration of a specific logical channel of a specific bearer is changed.

In an embodiment of the disclosure, in method 4, the type of the available uplink grant configuration of the specific logical channel of the specific bearer may be changed to: a type of uplink grant configuration specified by the network side device. In an embodiment of the disclosure, the specified type of uplink grant configuration may be, for example, a type of uplink grant configuration specified by RRC configuration.

It can be seen that in an embodiment of the disclosure, after the UE is switched to the second transmission mode, it is further determined whether the second switching condition of the UE is satisfied. When it is determined that the second switching condition of the UE is satisfied, the transmission mode of the UE is switched from the second transmission mode to the first transmission mode by executing any of the above-described methods 1 to 4.

In addition, it is also noted that in an embodiment of the disclosure, the above step 404 is an optional step. In detail, if the second switching condition determined at step 403 does not include that "the number of successful transmissions of the specific HARQ process of the UE is greater than or equal to the second threshold", the above step 403 may not need to be performed. If the second switching condition determined at step 403 includes that "the number of successful transmissions of the specific HARQ process of the UE is greater than or equal to the second threshold", the above step 403 needs to be performed.

In conclusion, in a transmission mode switching method provided in embodiments of the disclosure, the UE determines the first switching condition including that the number of transmission failures of a specific HARQ process of the UE is greater than or equal to the first threshold. The UE counts the number of transmission failures of the specific HARQ process, and in response to the number of transmission failures satisfying the first switching condition, a transmission mode of the UE is switched from the first transmission mode to the second transmission mode. In this way, in an embodiment of the disclosure, the specific HARQ process(es) can be defined in the first switching condition determined by the UE, and the UE may count the number(s) of transmission failures of the specific HARQ process(es) based on the first switching condition to determine whether to switch the transmission mode. In the method disclosed in the disclosure the specific HARQ process(es) for which the number(s) of transmission failures is to be counted by the UE may be defined. Therefore, for a UE having multiple HARQ processes, the number(s) of data transmission failures of which specific HARQ process(es) is used for determining whether to switch the transmission mode is defined, which solves the technical problem in the related art of "unable to determine the number(s) of data transmission failures of which specific HARQ process(es) is to be counted to determine whether to switch the transmission mode".

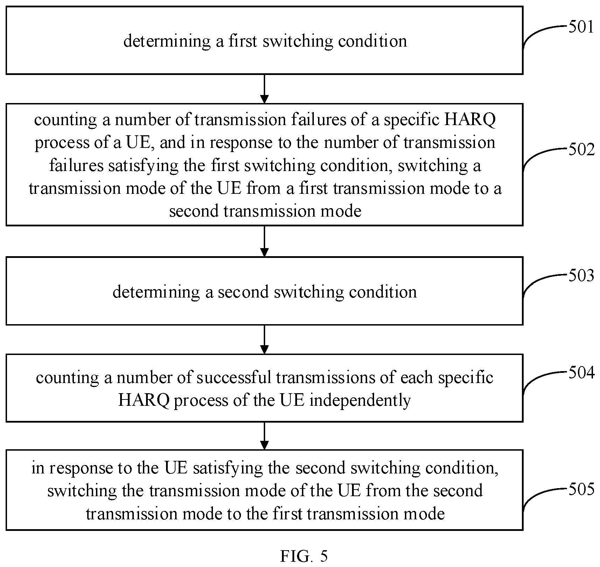

FIG. 5 is a flowchart of a transmission mode switching method provided by an embodiment of the disclosure. The method is performed by a UE. As illustrated in FIG. 5, the transmission mode switching method includes the following steps.

At step 501, a first switching condition is determined.

At step 502, a number of transmission failures of a specific HARQ process is counted, and in response to the number of transmission failures satisfying the first switching condition, a transmission mode of the UE is switched from a first transmission mode to a second transmission mode.

At step 503, a second switching condition is determined.

The relevant descriptions of steps 501-502 can be described with reference to the above description of embodiments, which will not be repeated herein.

At step 504, a number of successful transmissions of each specific HARQ process of the UE is counted independently.

In an embodiment of the disclosure, counting the number of successful transmissions of each specific HARQ process of the UE independently may include that each specific HARQ process corresponds to a counter for counting the number of successful transmissions. In response to an occurrence of a successful data transmission of a certain specific HARQ process, the number of the counter for counting the number of successful transmissions corresponding to the specific HARQ process is increased by 1.

For example, in an embodiment of the disclosure, the specific HARQ processes are a HARQ process-1 and a HARQ process-2, and the HARQ process-1 and the HARQ process-2 each corresponds to one counter. In response to an occurrence of a successful data transmission of the HARQ process-1, the counter for counting the number of successful transmissions corresponding to the HARQ process-1 is increased by 1, and in response to an occurrence of a successful data transmission of the HARQ process-2, the counter for counting the number of successful transmissions corresponding to the HARQ process-2 is increased by 1.

It is noted that in an embodiment of the disclosure, a method for determining the number of successful transmissions includes at least one of the following:
in response to receiving a data new-transmission indication of the specific HARQ process sent by a network side device, determining that a successful transmission occurs; or
in response to receiving a data reception success indication of the specific HARQ process sent by a network side device, determining that a successful transmission occurs; and
counting a number of consecutive successful transmissions of new data as the number of successful transmissions.

In an embodiment of the disclosure, the above data new-transmission indication and the data reception success indication may be sent by the network side device to the UE via a DCI signaling.

In an embodiment of the disclosure, when counting the number of successful transmissions of each specific HARQ process independently, the number of successful transmissions of each specific HARQ process may be counted starting from the first transmission of the new data for each specific HARQ process.

For example, in an embodiment of the disclosure, if the number of successful transmissions of the data 1 for the specific HARQ process-1 is to be counted, the counting starts from the first transmission of the data 1 for the specific HARQ process-1. During a process of transmitting the data 1 in the specific HARQ process-1, when the specific HARQ process-1 receives a data new-transmission indication sent by the network side device, the counter for counting the number of successful transmissions corresponding to the specific HARQ process-1 is increased by 1. If the specific HARQ process-1 starts to transmit data 2, the number of the counter for counting the number of successful transmissions corresponding to the specific HARQ process-1 is set to an initial value (e.g., 0).

In another embodiment of the disclosure, counting the number of successful transmissions of each specific HARQ process independently may include counting the number of successful transmissions of each specific HARQ process starting from the first transmission of new data for each specific HARQ process on the configured uplink grant configuration.

In detail, in an embodiment of the disclosure, the HARQ process includes a HARQ process transmitted on a configured uplink grant configuration, and/or, a HARQ process transmitted on a dynamically scheduled uplink grant configuration. The configured uplink grant (CG) configuration described above is configured by the network side device to the UE, and the type of the configured uplink grant configuration is periodic. There may be multiple CG configurations configured by the network side device to the UE. The network side device can select one or more CG configurations from the multiple CG configurations for the UE to use. Moreover, the dynamically scheduled uplink grant configuration is also configured by the network side device to the UE, and is dynamically scheduled based on a signaling (e.g., a DCI signaling).

On this basis, in an embodiment of the disclosure, counting the number of successful transmissions of each specific HARQ process starting from the first transmission of new data for each specific HARQ process on the CG configuration may include the following method.

The network side device configures the UE with a CG configuration, i.e., a CG-1 configuration, and a specific HARQ process-1 can use the CG-1 configuration to transmit data. In addition to using the CG-1 to transmit data, the specific HARQ process-1 can use the dynamically scheduled uplink grant configuration to transmit data. When counting the number of successful transmissions of the specific HARQ process-1, it may be started from the first transmission of new data for the HARQ process-1 on the CG-1 configuration.

In an embodiment of the disclosure, counting the number of successful transmissions of each specific HARQ process independently may include counting the number of successful transmissions of each specific HARQ process starting from the first transmission of new data for each specific HARQ process on a dynamically scheduled uplink grant configuration.

It is also noted that in an embodiment of the disclosure, when counting the number of successful transmissions of each specific HARQ process of the UE independently, if the number of successful transmissions of any specific HARQ process is greater than or equal to the first threshold, it is determined that the second switching condition is satisfied.

At step 505, in response to the UE satisfying the second switching condition, the transmission mode of the UE is switched from the second transmission mode to the first transmission mode.

A detailed description of the above step 505 can be referred to the above description of embodiments, which will not be repeated herein.

In conclusion, in a transmission mode switching method provided in embodiments of the disclosure, the UE determines the first switching condition including that the number of transmission failures of a specific HARQ process of the UE is greater than or equal to the first threshold. The UE counts the number of transmission failures of the specific HARQ process, and in response to the number of transmission failures satisfying the first switching condition, a transmission mode of the UE is switched from the first transmission mode to the second transmission mode. In this way, in an embodiment of the disclosure, the specific HARQ process(es) can be defined in the first switching condition determined by the UE, and the UE may count the number(s) of transmission failures of the specific HARQ process(es) based on the first switching condition to determine whether to switch the transmission mode. In the method disclosed in the disclosure, the specific HARQ process(es) for which the number(s) of transmission failures is to be counted by the UE may be defined. Therefore, for a UE having multiple HARQ processes, the number(s) of data transmission failures of which specific HARQ process(es) is used for determining whether to switch the transmission mode is defined, which solves the technical problem in the related art of "unable to determine the number(s) of data transmission failures of which specific HARQ process(es) is to be counted to determine whether to switch the transmission mode".

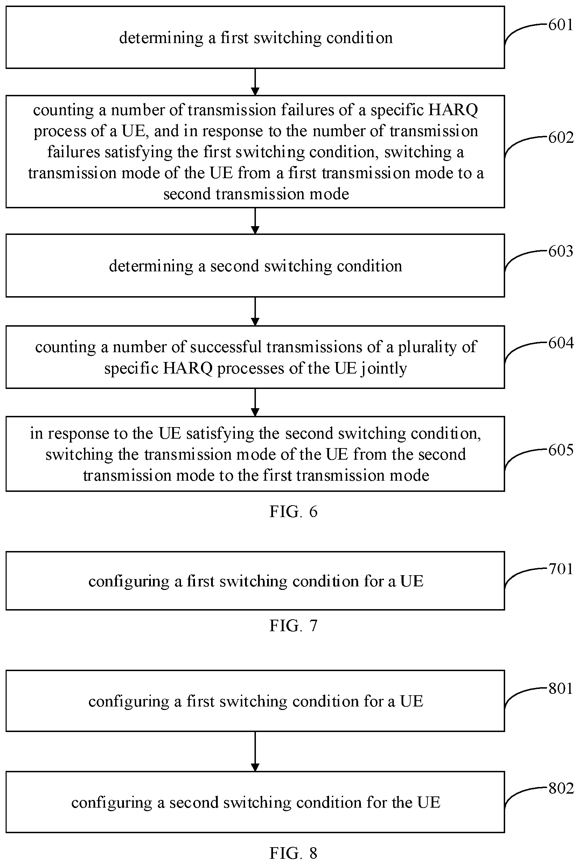

FIG. 6 is a flowchart of a transmission mode switching method provided by an embodiment of the disclosure. The method is performed by a UE. As illustrated in FIG. 6, the transmission mode switching method includes the following steps.

At step 601, a first switching condition is determined.

At step 602, a number of transmission failures of a specific HARQ process is counted, and in response to the number of transmission failures satisfying the first switching condition, a transmission mode of the UE is switched from a first transmission mode to a second transmission mode.

At step 603, a second switching condition is determined.

At step 604, a number of transmission failures of a plurality of specific HARQ processes of the UE is counted jointly.

In an embodiment of the disclosure, counting the number of successful transmissions of the plurality of specific HARQ processes of the UE jointly may be as follows. The plurality of specific HARQ processes correspond to one counter for counting the number of successful transmissions. In response to an occurrence of a successful data transmission of any specific HARQ process, the number of the counter for counting the number of successful transmissions is increased by 1.

For example, in an embodiment of the disclosure, the specific HARQ processes are the HARQ process-1 and the HARQ process-2, and the HARQ process-1 and the HARQ process-2 correspond to one counter for counting the number of successful transmissions. In response to an occurrence of a successful data transmission of either the HARQ process-1 or the HARQ process-2, the number of the counter for counting the number of successful transmissions is increased by 1.

It is noted that in an embodiment of the disclosure, a method for determining the number of successful data transmissions may include at least one of the following:
in response to receiving a data retransmission indication of the specific HARQ process sent by a network side device, determining that one successful data transmission occurs; or
in response to receiving a data reception success indication of the specific HARQ process sent by a network side device, determining that one successful data transmission occurs.

In an embodiment of the disclosure, the above data retransmission indication and the data reception success indication may be sent by the network side device to the UE via a DCI signaling.

In an embodiment of the disclosure, when jointly counting the plurality of specific HARQ processes, the number of successful transmissions of the plurality of specific HARQ processes may be counted starting from the first transmission of new data for a specific HARQ process firstly occurring in the plurality of specific HARQ processes.

For example, in an embodiment of the disclosure, the number of successful transmissions of the data 1 for the specific HARQ process-1 and the specific HARQ process-2 is to be counted, and the specific HARQ process-1 occurs before the specific HARQ process-2. The counting may start from the first transmission of the data 1 for the specific HARQ process-1. In the course of counting, when the specific HARQ process-1 receives a data retransmission indication sent by the network side device, or, when the specific HARQ process-2 receives a data retransmission indication sent by the network side device, the number of the counter for counting the number of successful transmissions is increased by 1.

In another embodiment of the disclosure, when jointly counting the plurality of specific HARQ processes, the number of successful transmissions of each specific HARQ process may be counted starting from the first transmission of new data over a configured uplink grant configuration for a specific HARQ process first occurring in the plurality of specific HARQ processes.

For example, in an embodiment of the disclosure, the number of successful transmissions of the data 1 for the specific HARQ process-1 and the specific HARQ process-2 may be counted, and the specific HARQ process-1 occurs before the specific HARQ process-2. The network side device configures a configured uplink grant configuration for the UE, i.e., a CG-1 configuration. The specific HARQ process-1 can use the CG-1 configuration to transmit data. In addition to using the CG-1 configuration to transmit data, the specific HARQ process-1 can use the dynamically scheduled uplink grant configuration to transmit data. When counting the number of successful transmissions of the specific HARQ process-1 and the specific HARQ process-2 jointly, counting may be started from the first transmission of the new data in the HARQ process-1 on the CG-1 configuration.

In another embodiment of the disclosure, when jointly counting the plurality of specific HARQ processes, counting the number of successful transmissions of each specific HARQ process may be started from the first transmission of the new data for a specific HARQ process first occurring in the plurality of specific HARQ processes on the dynamically scheduled uplink grant configuration.

At step 605, in response to the UE satisfying the second switching condition, the transmission mode of the UE is switched from the second transmission mode to the first transmission mode.

Detailed descriptions of the above steps 601-603, and step 605 can be referred to the above description of embodiments, which will not be repeated herein.

In conclusion, in a transmission mode switching method provided in embodiments of the disclosure, the UE determines the first switching condition including that the number of transmission failures of a specific HARQ process of the UE is greater than or equal to the first threshold. The UE counts the number of transmission failures of the specific HARQ process, and in response to the number of transmission failures satisfying the first switching condition, a transmission mode of the UE is switched from the first transmission mode to the second transmission mode. In this way, in an embodiment of the disclosure, the specific HARQ process(es) can be defined in the first switching condition determined by the UE, and the UE may count the number(s) of transmission failures of the specific HARQ process(es) based on the first switching condition to determine whether to switch the transmission mode. In the method disclosed in the disclosure, the specific HARQ process(es) for which the number(s) of transmission failures is to be counted by the UE may be defined. Therefore, for a UE having multiple HARQ processes, the number(s) of data transmission failures of which specific HARQ process(es) is used for determining whether to switch the transmission mode is defined, which solves the technical problem in the related art of "unable to determine the number(s) of data transmission failures of which specific HARQ process(es) is to be counted to determine whether to switch the transmission mode".

FIG. 7 is a flowchart of a transmission mode switching method provided by an embodiment of the disclosure. The method is performed by a base station. As illustrated in FIG. 7, the transmission mode switching method includes the following steps.

At step 701, a first switching condition is configured for a UE.

In an embodiment of the disclosure, the first switching condition may include that a number of transmission failures of a specific HARQ process of the UE is greater than or equal to a first threshold.

Detailed description of the first switching condition can be described with reference to the above description of embodiments, which will not be repeated here.

In conclusion, in a transmission mode switching method provided in embodiments of the disclosure, the UE determines the first switching condition including that the number of transmission failures of a specific HARQ process of the UE is greater than or equal to the first threshold. The UE counts the number of transmission failures of the specific HARQ process, and in response to the number of transmission failures satisfying the first switching condition, a transmission mode of the UE is switched from the first transmission mode to the second transmission mode. In this way, in an embodiment of the disclosure, the specific HARQ process(es) can be defined in the first switching condition determined by the UE, and the UE may count the number(s) of transmission failures of the specific HARQ process(es) based on the first switching condition to determine whether to switch the transmission mode. In the method disclosed in the disclosure, the specific HARQ process(es) for which the number(s) of transmission failures is to be counted by the UE may be defined. Therefore, for a UE having multiple HARQ processes, the number(s) of data transmission failures of which specific HARQ process(es) is used for determining whether to switch the transmission mode is defined, which solves the technical problem in the related art of "unable to determine the number(s) of data transmission failures of which specific HARQ process(es) is to be counted to determine whether to switch the transmission mode".

FIG. 8 is a flowchart of a transmission mode switching method provided by an embodiment of the disclosure. The method is performed by a base station. As illustrated in FIG. 8, the transmission mode switching method includes the following steps.

At step 801, a first switching condition is configured for a UE.

In an embodiment of the disclosure, the first switching condition may include that a number of transmission failures of a specific HARQ process of the UE is greater than or equal to a first threshold.

Detailed description of the first switching condition can be described with reference to the above description of embodiments, which will not be repeated here.

At step 802, a second switching condition is configured for the UE.

In an embodiment of the disclosure, the second switching condition may include at least one of the following:
sending switching indication information to the UE; or
a number of successful transmissions of a specific HARQ process of the UE being greater than or equal to a second threshold.

In an embodiment of the disclosure, the switching indication information includes at least one of the following:
first indication information indicating to exit a second transmission mode;
second indication information indicating to restore a first transmission mode;
third indication information indicating to restore a data transmission state configured by RRC;
fourth indication information indicating to switch to a data transmission state before switching to a second transmission mode;
a bearer identifier;
a logical channel identifier;
a cell group identifier;
a bearer type identifier;
a HARQ process identifier; or
a specified uplink grant configuration identifier.

Detailed description of the second switching condition can be described with reference to the above description of embodiments, which will not be repeated here.

In conclusion, in a transmission mode switching method provided in embodiments of the disclosure, the UE determines the first switching condition including that the number of transmission failures of a specific HARQ process of the UE is greater than or equal to the first threshold. The UE counts the number of transmission failures of the specific HARQ process, and in response to the number of transmission failures satisfying the first switching condition, a transmission mode of the UE is switched from the first transmission mode to the second transmission mode. In this way, in an embodiment of the disclosure, the specific HARQ process(es) can be defined in the first switching condition determined by the UE, and the UE may count the number(s) of transmission failures of the specific HARQ process(es) based on the first switching condition to determine whether to switch the transmission mode. In the method disclosed in the disclosure, the specific HARQ process(es) for which the number(s) of transmission failures is to be counted by the UE may be defined. Therefore, for a UE having multiple HARQ processes, the number(s) of data transmission failures of which specific HARQ process(es) is used for determining whether to switch the transmission mode is defined, which solves the technical problem in the related art of "unable to determine the number(s) of data transmission failures of which specific HARQ process(es) is to be counted to determine whether to switch the transmission mode".

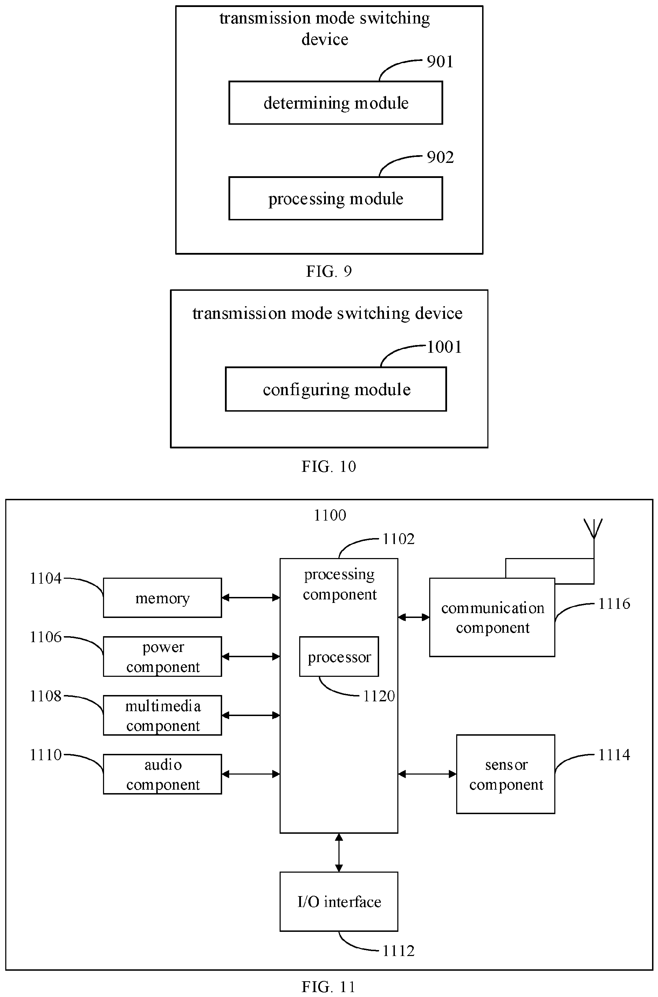

FIG. 9 is a schematic diagram of a transmission mode switching device provided by an embodiment of the disclosure. As illustrated in FIG. 9, the device 900 includes:
a determining module, configured to determine a first switching condition, the first switching condition including that a number of transmission failures of a specific HARQ process of a UE is greater than or equal to a first threshold; and
a processing module, configured to count the number of transmission failures of the specific HARQ process of the UE, and in response to the number of transmission failures satisfying the first switching condition, switch a transmission mode of the UE from a first transmission mode to a second transmission mode.

In conclusion, with a transmission mode switching device provided in embodiments of the disclosure, the UE determines the first switching condition including that the number of transmission failures of a specific HARQ process of the UE is greater than or equal to the first threshold. The UE counts the number of transmission failures of the specific HARQ process, and in response to the number of transmission failures satisfying the first switching condition, a transmission mode of the UE is switched from the first transmission mode to the second transmission mode. In this way, in an embodiment of the disclosure, the specific HARQ process(es) can be defined in the first switching condition determined by the UE, and the UE may count the number(s) of transmission failures of the specific HARQ process(es) based on the first switching condition to determine whether to switch the transmission mode. In the method disclosed in the disclosure, the specific HARQ process(es) for which the number(s) of transmission failures is to be counted by the UE may be defined. Therefore, for a UE having multiple HARQ processes, the number(s) of data transmission failures of which specific HARQ process(es) is used for determining whether to switch the transmission mode is defined, which solves the technical problem in the related art of "unable to determine the number(s) of data transmission failures of which specific HARQ process(es) is to be counted to determine whether to switch the transmission mode".

In an embodiment of the disclosure, the specific HARQ process includes at least one of the following:
a HARQ process specified by a network side device or agreed upon by a protocol;
a HARQ process corresponding to at least one configured uplink grant configuration specified by a network side device or agreed upon by a protocol; or
a HARQ process corresponding to data that corresponds to a specific identifier.

Optionally, in an embodiment of the disclosure, the specific identifier includes at least one of the following:
a bearer identifier;
a logical channel identifier;
a cell group identifier;
a bearer type identifier; or
an identifier of changing a data transmission mode.

Optionally, in an embodiment of the disclosure, the processing module is further configured to:
count a number of transmission failures of each specific HARQ process of the UE, independently; or
count a number of transmission failures of a plurality of specific HARQ processes of the UE, jointly.

Optionally, in an embodiment of the disclosure, the processing module is further configured to:
count the number of transmission failures of the specific HARQ process of the UE starting from a first transmission of the specific HARQ process.

Optionally, in an embodiment of the disclosure, the HARQ process includes a HARQ process transmitted on a configured uplink grant configuration, and/or, a HARQ process transmitted on a dynamically scheduled uplink grant configuration.

The processing module is further configured to:
count the number of transmission failures of the specific HARQ process of the UE starting from a first transmission of the specific HARQ process on the configured uplink grant configuration or on the dynamically scheduled uplink grant configuration.

Optionally, in an embodiment of the disclosure, the processing module is further configured to:
in response to receiving a data retransmission indication of the specific HARQ process sent by a network side device, increase the number of transmission failures by 1; or
in response to receiving a data reception failure indication of the specific HARQ process sent by the network side device, increase the number of transmission failures by 1.

Optionally, in an embodiment of the disclosure, the processing module is further configured to:
activate a data replication function of a specific bearer;
change a number of RLC entities in an activated state corresponding to a specific bearer;
activate a designated first RLC entity; or
change a type of an available uplink grant configuration of a specific logical channel of a specific bearer.

Optionally, in an embodiment of the disclosure, the processing module is further configured to:
determine that a SCS of an uplink grant configuration available to the second transmission mode comprises all types of SCS;
determine that a SCS of an uplink grant configuration available to the second transmission mode comprises an SCS whose value is greater than an SCS value used by the first transmission mode;
determine that a duration of a PUSCH corresponding to an uplink grant configuration available to the second transmission mode comprises all PUSCH durations;
determine that the second transmission mode is capable to use an uplink Grant Type-1;
determine that the second transmission mode is capable to use uplink grant configurations of all cells;
determine that the second transmission mode is capable to use an uplink grant of a designated cell;
determine that the second transmission mode is capable to use all resources of an uplink Grant Type-2; or
determine that the second transmission mode is capable to use uplink grants of all physical priorities.

Optionally, in an embodiment of the disclosure, the determining module is further configured to:
determine the first switching condition based on a protocol; or
obtain the first switching condition indicated by a network side device.

Optionally, in an embodiment of the disclosure, the device is further configured to:
determine a second switching condition; and
in response to the UE satisfying the second switching condition, switch the transmission mode of the UE from the second transmission mode to the first transmission mode.

Optionally, in an embodiment of the disclosure, the second switching condition includes at least one of the following:
receiving switching indication information from a network side device; or
a number of successful transmissions of the specific HARQ process of the UE being greater than or equal to a second threshold.

Optionally, in an embodiment of the disclosure, the switching indication information includes at least one of the following:
first indication information indicating to exit the second transmission mode;
second indication information indicating to restore the first transmission mode;
third indication information indicating to restore a data transmission state configured by RRC;
fourth indication information indicating to switch to a data transmission state before switching to the second transmission mode;
a bearer identifier;
a logical channel identifier;
a cell group identifier;
a bearer type identifier;
a HARQ process identifier; or
a configured uplink grant configuration identifier.

Optionally, in an embodiment of the disclosure, the device is further configured to:
count a number of successful transmissions of each specific HARQ process of the UE, independently; or
count a number of successful transmissions of a plurality of specific HARQ processes of the UE, jointly.

Optionally, in an embodiment of the disclosure, the device is further configured to:
count the number of successful transmissions of the specific HARQ process of the UE from a first transmission of the specific HARQ process.

Optionally, in an embodiment of the disclosure, the HARQ process includes a HARQ process transmitted on a configured uplink grant configuration, and/or, a HARQ process transmitted on a dynamically scheduled uplink grant configuration.

The device is further configured to:
count the number of successful transmissions of the specific HARQ process of the UE starting from the first transmission of the specific HARQ process on the configured uplink grant configuration or on the dynamically scheduled uplink grant configuration.

Optionally, in an embodiment of the disclosure, the device is further configured to:
in response to receiving a data new-transmission indication of the specific HARQ process sent by a network side device, increase the number of successful transmissions by 1;
in response to receiving a data reception success indication of the specific HARQ process sent by the network side device, increase the number of transmission failures by 1; and
count a number of consecutive successful transmissions of new data as the number of successful transmissions.

Optionally, in an embodiment of the disclosure, the device is further configured to:
deactivate a data replication function of a specific bearer;
reduce a number of RLC entities in an activated state corresponding to a specific bearer;
activate a specified second RLC entity; or
change a type of an available uplink grant configuration of a specific logical channel of a specific bearer.

Optionally, in an embodiment of the disclosure, the device is further configured to:
change the type of the available uplink grant configuration of the specific logical channel of the specific bearer to: a type of an uplink grant configuration specified by a network side device.

FIG. 10 is a schematic diagram of a transmission mode switching device provided by an embodiment of the disclosure. As illustrated in FIG. 10, the device 1000 includes:
a configuring module, configured to configure a first switching condition for a UE, the first switching condition including that a number of transmission failures of a specific HARQ process of the UE is greater than or equal to a first threshold.

In conclusion, with a transmission mode switching device provided in embodiments of the disclosure, the UE determines the first switching condition including that the number of transmission failures of a specific HARQ process of the UE is greater than or equal to the first threshold. The UE counts the number of transmission failures of the specific HARQ process, and in response to the number of transmission failures satisfying the first switching condition, a transmission mode of the UE is switched from the first transmission mode to the second transmission mode. In this way, in an embodiment of the disclosure, the specific HARQ process(es) can be defined in the first switching condition determined by the UE, and the UE may count the number(s) of transmission failures of the specific HARQ process(es) based on the first switching condition to determine whether to switch the transmission mode. In the method disclosed in the disclosure, the specific HARQ process(es) for which the number(s) of transmission failures is to be counted by the UE may be defined. Therefore, for a UE having multiple HARQ processes, the number(s) of data transmission failures of which specific HARQ process(es) is used for determining whether to switch the transmission mode is defined, which solves the technical problem in the related art of "unable to determine the number(s) of data transmission failures of which specific HARQ process(es) is to be counted to determine whether to switch the transmission mode".

Optionally, in an embodiment of the disclosure, the device is further configured to:
configure a second switching condition for the UE.

Optionally, in an embodiment of the disclosure, the second switching condition includes at least one of the following:
sending switching indication information to the UE; or
a number of successful transmissions of the specific HARQ process of the UE being greater than or equal to a second threshold.

Optionally, in an embodiment of the disclosure, the switching indication information includes at least one of the following:
first indication information indicating to exit a second transmission mode;
second indication information indicating to restore a first transmission mode;
third indication information indicating to restore a data transmission state configured by RRC;
fourth indication information indicating to switch to a data transmission state before switching to a second transmission mode;
a bearer identifier;
a logical channel identifier;
a cell group identifier;
a bearer type identifier;
a HARQ process identifier; or
a specified uplink grant configuration identifier.

FIG. 11 is a block diagram illustrating a UE 1100 according to an embodiment of the disclosure. For example, the UE 1100 may be a mobile phone, a computer, a digital broadcasting terminal device, a message transceiver device, a game console, a tablet device, a medical device, a fitness device and a personal digital assistant.

As illustrated in FIG. 11, the UE 1100 may include at least one of the following components: a processing component 1102, a memory 1104, a power component 1106, a multimedia component 1108, an audio component 1110, an input/output (I/O) interface 1112, a sensor component 1113, and a communication component 1116.

The processing component 1102 typically controls overall operations of the UE 1100, such as the operations associated with display, telephone calls, data communications, camera operations, and recording operations. The processing component 1102 may include at least one processor 1120 to perform all or part of the steps in the above described methods. Moreover, the processing component 1102 may include at least one module which facilitate the interaction between the processing component 1102 and other components. For example, the processing component 1102 may include a multimedia module to facilitate the interaction between the multimedia component 1108 and the processing component 1102.

The memory 1104 is configured to store various types of data to support the operation of the UE 1100. Examples of such data include instructions for any applications or methods operated on the UE 1100, contact data, phonebook data, messages, pictures, video, etc. The memory 1104 may be implemented using any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic or optical disk.

The power component 1106 provides power to various components of the UE 1100. The power component 1106 may include a power management system, at least one power source, and any other components associated with the generation, management, and distribution of power in the UE 1100.

The multimedia component 1108 includes a screen providing an output interface between the UE 1100 and the user. In some embodiments, the screen may include a Liquid Crystal Display (LCD) and a Touch Panel (TP). If the screen includes the touch panel, the screen may be implemented as a touch screen to receive input signals from the user. The touch panel includes at least one touch sensor to sense touches, swipes, and gestures on the touch panel. The touch sensor may not only sense a boundary of a touch or swipe action, but also sense a period of wakeup time and a pressure associated with the touch or swipe action. In some embodiments, the multimedia component 1108 includes a front-facing camera and/or a rear-facing camera. When the UE 1100 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 1110 is configured to output and/or input audio signals. For example, the audio component 1110 includes a microphone (MIC) configured to receive an external audio signal when the UE 1100 is in an operation mode, such as a call mode, a recording mode, and a voice recognition mode. The received audio signal may be further stored in the memory 1104 or transmitted via the communication component 1116. In some embodiments, the audio component 1110 further includes a speaker to output audio signals.

The I/O interface 1112 provides an interface between the processing component 1102 and peripheral interface modules, such as a keyboard, a click wheel, buttons, and the like. The buttons may include, but are not limited to, a home button, a volume button, a starting button, and a locking button.

The sensor component 1113 includes at least one sensor to provide status assessments of various aspects of the UE 1100. For instance, the sensor component 1113 may detect an open/closed status of the UE 1100, relative positioning of components, e.g., the display and the keypad, of the UE 1100, a change in position of the UE 1100 or a component of the UE 1100, a presence or absence of user contact with the UE 1100, an orientation or an acceleration/deceleration of the UE 1100, and a change in temperature of the UE 1100. The sensor component 1113 may include a proximity sensor configured to detect the presence of nearby objects without any physical contact. The sensor component 1114 may also include a light sensor, such as a Complementary Metal Oxide Semiconductor (CMOS) or Charge-Coupled Device (CCD) image sensor, for use in imaging applications. In some embodiments, the sensor component 1113 may also include an accelerometer sensor, a gyroscope sensor, a magnetic sensor, a pressure sensor, or a temperature sensor.

The communication component 1116 is configured to facilitate communication, wired or wirelessly, between the UE 1100 and other devices. The UE 1100 can access a wireless network based on a communication standard, such as Wi-Fi, 2G or 3G, or a combination thereof. In an embodiment, the communication component 1116 receives a broadcast signal from an external broadcast management system or broadcast associated information via a broadcast channel. In an embodiment, the communication component 1116 further includes a Near Field Communication (NFC) module to facilitate short-range communication. For example, the NFC module may be implemented based on a RF Identification (RFID) technology, an Infrared Data Association (IrDA) technology, an Ultra-Wide Band (UWB) technology, a Blue Tooth (BT) technology, and other technologies.

In embodiments, the UE 1100 may be implemented with at least one Application Specific Integrated Circuit (ASIC), Digital Signal Processor (DSP), Digital Signal Processing Device (DSPD), Programmable Logic Device (PLD), Field Programmable Gate Array (FPGA), controller, micro-controller, microprocessor or other electronic components, for performing the above described methods.

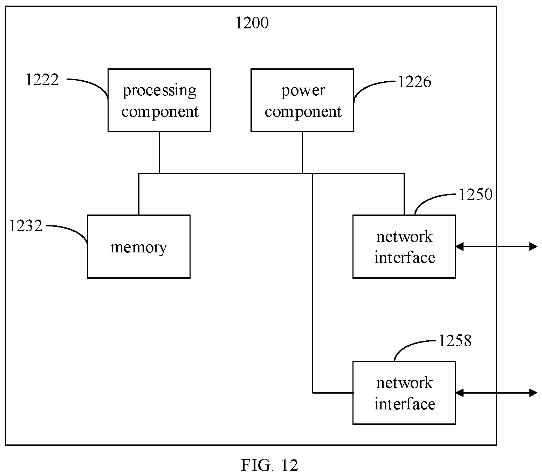

FIG. 12 is a block diagram of a network side device 1200 provided by an embodiment of the disclosure. For example, the network side device 1200 may be provided as a network device. As illustrated in FIG. 12, the network side device 1200 includes a processing component 1211, which further includes at least one processor, and memory resources represented by a memory 1232 for storing instructions, such as application programs, that may be executed by a processing component 1222. The application programs stored in the memory 1232 may include one or more modules each corresponding to a set of instructions. In addition, the processing component 1215 is configured to execute instructions to perform any method described above that is performed by the network side device, for example, the method shown in FIG. 1.

The network side device 1200 may also include a power component 1226 configured to perform power management of the network side device 1200, a wired or wireless network interface 1250 configured to connect the network side device 1200 to a network, and an I/O interface 1258. The network side device 1200 may operate based on an operating system stored in the memory 1232, such as Windows Server TM, Mac OS XTM, UnixTM, LinuxTM, FreeBSDTM, or the like.

In the above embodiments of the disclosure, the methods provided by embodiments of the disclosure are introduced from the perspectives of the network side device, the UE, and the RIS array respectively. In order to realize each of the functions in the method provided by the above embodiments of the disclosure, the network side device and the UE may include a hardware structure and a software module to implement the above-mentioned various functions in the form of a hardware structure, a software module, or a combination of the hardware structure and the software module. A certain function may be implemented in the form of a hardware structure, a software module, or a combination of the hardware structure and the software module.

In the above embodiments of the disclosure, the methods provided by embodiments of the disclosure are introduced from the perspectives of the network side device, the UE, and the RIS array respectively. In order to realize each of the functions in the method provided by the above embodiments of the disclosure, the network side device and the UE may include a hardware structure and a software module to implement the above-mentioned various functions in the form of a hardware structure, a software module, or a combination of the hardware structure and the software module. A certain function may be implemented in the form of a hardware structure, a software module, or a combination of the hardware structure and the software module.

Embodiments of the disclosure provide a communication device. The communication device may include a transceiver module and a processing module. The transceiver module may include a sending module and/or a receiving module, the sending module is used for realizing a sending function, and the receiving module is used for realizing a receiving function, and the transceiver module may realize the sending function and/or the receiving function.

The communication device may be a terminal device (e.g., the terminal device in the method embodiments described above), a device in the terminal device, or a device capable of being used together with the terminal device. Alternatively, the communication device may be a network device, or a device in the network device, or a device capable of being used together with the network device.

Embodiments of the disclosure provide another communication device. The communication device may be a network device, a terminal device (e.g., the terminal device in the method embodiments described above), or a chip, a chip system or a processor that supports the network device to realize the above-described methods, or a chip, a chip system or a processor that supports the terminal device to realize the above-described methods. The device may be used to realize the methods described in the above method embodiments with reference to the descriptions of the above-described method embodiments.

The communication device may include one or more processors. The processor may be a general purpose processor or a dedicated processor, such as, a baseband processor or a central processor. The baseband processor is used for processing communication protocols and communication data. The central processor is used for controlling the communication device (e.g., a network device, a baseband chip, a terminal device, a terminal device chip, a central unit (CU), or a distributed unit (DU)), executing computer programs, and processing data of the computer programs.

Optionally, the communication device may further include one or more memories on which computer programs may be stored. When the processor executes the computer programs, the communication device is caused to perform the methods described in the above method embodiments. Optionally, data may also be stored in the memory. The communication device and the memory may be provided separately or may be integrated together.

Optionally, the communication device may also include a transceiver and an antenna. The transceiver may be referred to as a transceiver unit, a transceiver machine, or a transceiver circuit, for realizing the transceiver function. The transceiver may include a receiver and a transmitter. The receiver may be referred to as a receiver machine or a receiving circuit, for realizing the receiving function. The transmitter may be referred to as a transmitter machine or a transmitting circuit, for realizing the transmitting function.

Optionally, the communication device may also include one or more interface circuits. The interface circuits are used to receive code instructions and transmit them to the processor. The processor runs the code instructions to cause the communication device to perform the method described in the method embodiments.

When the communication device is implemented as a terminal device (e.g., the terminal device in the method embodiments described above), the processor is used to perform the method shown in FIG. 8.

When the communication device is implemented as a network device, the transceiver is used to perform the method shown in FIG. 6- FIG. 7.

When the communication device is implemented as an RIS array, the transceiver is used to perform the method shown in FIG. 1- FIG. 5.

In an implementation, the processor may include a transceiver for implementing the receiving and transmitting functions. The transceiver may be, for example, a transceiver circuit, an interface, or an interface circuit. The transceiver circuit, interface, or interface circuit for implementing the receiving and transmitting functions may be separated or may be integrated together. The transceiver circuit, interface, or interface circuit described above may be used for code/data reading and writing, or may be used for signal transmission or delivery.

In an implementation, the processor may store computer programs that can be executed by the processor and may cause the communication device to perform the methods described in the method embodiments above. The computer programs may be solidified in the processor, in which case the processor may be implemented by hardware.

In an implementation, the communication device may include circuits. The circuits may implement the sending, receiving or communicating function in the preceding method embodiments. The processors and transceivers described in this disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processors and transceivers can also be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the above description of embodiments may be a network device or a terminal device (e.g., the terminal device in the above method embodiments), but the scope of the communication device described in the disclosure is not limited thereto, and the structure of the communication device may not be limited herein. The communication device may be a stand-alone device or may be part of a larger device. For example, the described communication device may be:
(1) a stand-alone IC, chip, chip system or subsystem;
(2) a collection of ICs including one or more ICs, optionally, the collection of ICs may also include storage components for storing data and computer programs;
(3) an ASIC, such as a modem;
(4) modules that can be embedded within other devices;
(5) receivers, terminal devices, smart terminal devices, cellular phones, wireless devices, handheld machines, mobile units, in-vehicle devices, network devices, cloud devices, artificial intelligence devices, and the like; and
(6) others.

In the case where the communication device may be a chip or a chip system, the chip includes a processor and an interface. There may be one or more processors and multiple interfaces.

Optionally, the chip further includes a memory used for storing necessary computer programs and data.

It is understandable by those skilled in the art that various illustrative logical blocks and steps listed in embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be construed as being beyond the scope of protection of embodiments of the disclosure.

Embodiments of the disclosure also provide a system. The system includes a communication device as a terminal device (e.g., the first terminal device in the above method embodiments) and a communication device as a network device in the preceding embodiments. Or, the system includes a communication device as a terminal device (e.g., the first terminal device in the above method embodiments) and a communication device as a network device in the preceding embodiments.

The disclosure also provides a readable storage medium having instructions stored thereon. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, it may be implemented, in whole or in part, in the form of a computer program product. The computer program product includes one or more computer programs. When loading and executing the computer program on the computer, all or part of processes or functions described in embodiments of the disclosure may be implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., by using coaxial cables, fiber optics, or digital subscriber lines (DSLs) or wirelessly (e.g., by using infrared wave, wireless wave, or microwave). The computer-readable storage medium may be any usable medium to which the computer has access or a data storage device such as a server and a data center integrated by one or more usable mediums. The usable medium may be a magnetic medium (e.g., floppy disk, hard disk, and tape), an optical medium (e.g., a high-density digital video disc (DVD)), or a semiconductor medium (e.g., a solid state disk (SSD)).

Those skilled in the art understand that "first", "second", and other various numerical numbers involved in the disclosure are only described for the convenience of differentiation, and are not used to limit the scope of embodiments of the disclosure, or indicate the order of precedence.

The term "at least one" in the disclosure may also be described as one or more, and the term "multiple" may be two, three, four, or more, which is not limited in the disclosure. In embodiments of the disclosure, for a type of technical features, "first", "second", and "third", and "A", "B", "C" and "D" are used to distinguish different technical features of the type, the technical features described using the "first", "second", and "third", and "A", "B", "C" and "D" do not indicate any order of precedence or magnitude.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples are considered as exemplary only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A transmission mode switching method, performed by a user equipment (UE), comprising:
determining a first switching condition, the first switching condition comprising that a number of transmission failures of a specific hybrid automatic repeat request (HARQ) process of the UE is greater than or equal to a first threshold; and
counting the number of transmission failures of the specific HARQ process of the UE, and in response to the number of transmission failures satisfying the first switching condition, switching a transmission mode of the UE from a first transmission mode to a second transmission mode.

2. The method of claim 1, wherein the specific HARQ process comprises at least one of:
a HARQ process specified by a network side device or agreed upon by a protocol;
a HARQ process corresponding to at least one configured uplink grant configuration specified by a network side device or agreed upon by a protocol; or
a HARQ process corresponding to data that corresponds to a specific identifier.

3. The method of claim 2, wherein the specific identifier comprises at least one of:
a bearer identifier;
a logical channel identifier;
a cell group identifier;
a bearer type identifier; or
an identifier of changing a data transmission mode.

4. The method of claim 1, wherein counting the number of transmission failures of the specific HARQ process of the UE comprises at least one of:
counting a number of transmission failures of each specific HARQ process of the UE, independently; or
counting a number of transmission failures of a plurality of specific HARQ processes of the UE, jointly.

5. The method of any one of claims 1-4, wherein counting the number of transmission failures of the specific HARQ process of the UE comprises:
counting the number of transmission failures of the specific HARQ process of the UE starting from a first transmission of the specific HARQ process.

6. The method of claim 1, wherein the HARQ process comprises a HARQ process transmitted on a configured uplink grant configuration, and/or, a HARQ process transmitted on a dynamically scheduled uplink grant configuration; and
counting the number of transmission failures of the specific HARQ process of the UE comprises:
counting the number of transmission failures of the specific HARQ process of the UE starting from a first transmission of the specific HARQ process on the configured uplink grant configuration or on the dynamically scheduled uplink grant configuration.

7. The method of claim 1, wherein counting the number of transmission failures of the specific HARQ process of the UE comprises at least one of:
in response to receiving a data retransmission indication of the specific HARQ process sent by a network side device, increasing the number of transmission failures by 1; or
in response to receiving a data reception failure indication of the specific HARQ process sent by the network side device, increasing the number of transmission failures by 1.

8. The method of claim 1, wherein switching the transmission mode of the UE from the first transmission mode to the second transmission mode comprises at least one of:
activating a data replication function of a specific bearer;
changing a number of radio link control (RLC) entities in an activated state corresponding to a specific bearer;
activating a designated first RLC entity; or
changing a type of an available uplink grant configuration of a specific logical channel of a specific bearer.

9. The method of claim 8, wherein changing the type of the available uplink grant configuration of the specific logical channel of the specific bearer comprises at least one of:
determining that a subcarrier spacing (SCS) of an uplink grant configuration available to the second transmission mode comprises all types of SCSs;
determining that a SCS of an uplink grant configuration available to the second transmission mode comprises an SCS whose value is greater than an SCS value used by the first transmission mode;
determining that a duration of a physical uplink shared channel (PUSCH) corresponding to an uplink grant configuration available to the second transmission mode comprises all PUSCH durations;
determining that the second transmission mode is capable to use an uplink grant configuration type-1;
determining that the second transmission mode is capable to use uplink grant configurations of all cells;
determining that the second transmission mode is capable to use an uplink grant configuration of a designated cell;
determining that the second transmission mode is capable to use all resources of an uplink grant configuration type-2; or
determining that the second transmission mode is capable to use uplink grant configurations of all physical priorities.

10. The method of claim 1, wherein determining the first switching condition comprises at least one of:
determining the first switching condition based on a protocol; or
obtaining the first switching condition indicated by a network side device.

11. The method of claim 1, further comprising:
determining a second switching condition; and
in response to the UE satisfying the second switching condition, switching the transmission mode of the UE from the second transmission mode to the first transmission mode.

12. The method of claim 11, wherein the second switching condition comprises at least one of:
receiving switching indication information from a network side device; or
a number of successful transmissions of the specific HARQ process of the UE being greater than or equal to a second threshold.

13. The method of claim 12, wherein the switching indication information comprises at least one of:
first indication information indicating to exit the second transmission mode;
second indication information indicating to restore the first transmission mode;
third indication information indicating to restore a data transmission state configured by radio resource control (RRC);
fourth indication information indicating to switch to a data transmission state before switching to the second transmission mode;
a bearer identifier;
a logical channel identifier;
a cell group identifier;
a bearer type identifier;
a HARQ process identifier; or
a configured uplink grant configuration identifier.

14. The method of claim 12, wherein the method further comprises: counting the number of successful transmissions of the specific HARQ process of the UE in one of the following ways:
counting a number of successful transmissions of each specific HARQ process of the UE, independently; or
counting a number of successful transmissions of a plurality of specific HARQ processes of the UE, jointly.

15. The method of claim 14, wherein counting the number of successful transmissions of the specific HARQ process of the UE comprises:
counting the number of successful transmissions of the specific HARQ process of the UE from a first transmission of the specific HARQ process.

16. The method of claim 14, wherein the HARQ process comprises a HARQ process transmitted on a configured uplink grant configuration, and/or, a HARQ process transmitted on a dynamically scheduled uplink grant configuration; and
wherein counting the number of successful transmissions of the specific HARQ process of the UE comprises:
counting the number of successful transmissions of the specific HARQ process of the UE starting from the first transmission of the specific HARQ process on the configured uplink grant configuration or on the dynamically scheduled uplink grant configuration.

17. The method of claim 14, wherein counting the number of successful transmissions of the specific HARQ process of the UE comprises at least one of:
in response to receiving a data new-transmission indication of the specific HARQ process sent by a network side device, increasing the number of successful transmissions by 1;
in response to receiving a data reception success indication of the specific HARQ process sent by the network side device, increasing the number of transmission failures by 1; or
counting a number of consecutive successful transmissions of new data as the number of successful transmissions.

18. The method of claim 11, wherein switching the transmission mode of the UE from the second transmission mode to the first transmission mode comprises at least one of:
deactivating a data replication function of a specific bearer;
reducing a number of RLC entities in an activated state corresponding to a specific bearer;
activating a specified second RLC entity; or
changing a type of an available uplink grant configuration of a specific logical channel of a specific bearer.

19. The method of claim 18, wherein changing the type of the available uplink grant configuration of the specific logical channel of the specific bearer comprises:
changing the type of the available uplink grant configuration of the specific logical channel of the specific bearer to: a type of an uplink grant configuration specified by a network side device.

20. A transmission mode switching method, performed by a network side device, comprising:
configuring a first switching condition for a user equipment (UE), the first switching condition comprising that a number of transmission failures of a specific hybrid automatic repeat request (HARQ) process of the UE is greater than or equal to a first threshold.

21. The method of claim 20, further comprising: configuring a second switching condition for the UE.

22. The method of claim 21, wherein the second switching condition comprises at least one of:
sending switching indication information to the UE; or
a number of successful transmissions of the specific HARQ process of the UE being greater than or equal to a second threshold.

23. The method of claim 22, wherein the switching indication information comprises at least one of:
first indication information indicating to exit a second transmission mode;
second indication information indicating to restore a first transmission mode;
third indication information indicating to restore a data transmission state configured by radio resource control (RRC);
fourth indication information indicating to switch to a data transmission state before switching to the second transmission mode;
a bearer identifier;
a logical channel identifier;
a cell group identifier;
a bearer type identifier;
a HARQ process identifier; or
a specified uplink grant configuration identifier.

24. A transmission mode switching device, comprising:
a determining module, configured to determine a first switching condition, the first switching condition comprising that a number of transmission failures of a specific hybrid automatic repeat request (HARQ) process of a user equipment (UE) is greater than or equal to a first threshold; and
a processing module, configured to count the number of transmission failures of the specific HARQ process of the UE, and in response to the number of transmission failures satisfying the first switching condition, switch a transmission mode of the UE from a first transmission mode to a second transmission mode.

25. A transmission mode switching device, comprising:
a configuring module, configured to configure a first switching condition for a user equipment (UE), the first switching condition comprising that a number of transmission failures of a specific hybrid automatic repeat request (HARQ) process of the UE is greater than or equal to a first threshold.

26. A communication device comprising a processor and a memory having a computer program stored thereon that, when executed by the processor, the device is caused to implement the method of any one of claims 1-19.

27. A communication device comprising a processor and a memory having a computer program stored thereon that, when executed by the processor, the device is caused to implement the method of any one of claims 20-23.

28. A communication device comprising: a processor and an interface circuit;
wherein the interface circuit is configured to receive code instructions and transmit the code instructions to the processor; and
the processor is configured to run the code instructions to implement the method of any one of claims 1-19.

29. A communication device comprising: a processor and an interface circuit;
wherein the interface circuit is configured to receive code instructions and transmit the code instructions to the processor; and
the processor is configured to run the code instructions to implement the method of any one of claims 20-23.

30. A computer readable storage medium having instructions stored thereon, wherein when the instructions are executed, the method of any one of claims 1-19 is implemented.

31. A computer readable storage medium having instructions stored thereon, wherein when the instructions are executed, the method of any one of claims 20-23 is implemented.
